Europäisches Patentamt

European Patent Office

Office européen des brevets

(19)

(11) Veröffentlichungsnummer: **0 282 729**
**B1**

(12) # EUROPÄISCHE PATENTSCHRIFT

(45) Veröffentlichungstag der Patentschrift:
24.10.90

(21) Anmeldenummer: 88101924.4

(22) Anmeldetag: 10.02.88

(51) Int. Cl.⁵: **B29C 65/60**

(54) Verfahren zum Applizieren von Dekorationselementen.

(30) Priorität: 05.03.87 DE 3707113

(43) Veröffentlichungstag der Anmeldung:
21.09.88 Patentblatt 88/38

(45) Bekanntmachung des Hinweises auf die Patenterteilung:
24.10.90 Patentblatt 90/43

(84) Benannte Vertragsstaaten:
AT BE CH DE ES FR GB GR IT LI LU NL SE

(56) Entgegenhaltungen:
DE-B- 2 805 136
FR-A- 2 082 494
GB-A- 1 123 797

(73) Patentinhaber: D. Swarovski & Co.,
Postfach 15 Swarovskistrasse 36,
A-6112 Wattens/Tirol(AT)

(72) Erfinder: Buchbauer, Burkhart, Bahnhofstrasse 1,
A-6112 Wattens(AT)

(74) Vertreter: Kador & Partner, Corneliusstrasse 15,
D-8000 München 5(DE)

## Beschreibung

Die Erfindung betrifft ein Verfahren zum Applizieren eines geschliffenen Ziersteines. Dekorationselemente, wie geschliffene Ziersteine, dienen zur Verzierung von Gegenständen, wie z.B. Kleidungsstücken und Accessoires.

Ein bekanntes Dekorationselement (DE-PS 2 520 126) ist als Niet ausgebildet und weist auf der Unterseite eine Schmelzklebstoffschicht auf, die durch Wärmezufuhr klebfähig gemacht werden kann. Der Vorteil dieses bekannten Dekorationselements gegenüber üblichen derartigen Ziernieten besteht darin, dass es durch einfaches Aufbringen auf ein Material und durch anschliessendes Erwärmen mit dem Material verbunden werden kann, ohne dass es erforderlich gewesen ist, das Material zu perforieren.

Es hat sich jedoch gezeigt, dass bei bestimmten Materialien, wie z.B. geschichteten Materialien oder Wildleder, bei diesem bekannten Dekorationselement die Gefahr besteht, dass sich im Gebrauch die obere Materialschicht mit dem Dekorationselement von dem übrigen Material ablöst, so dass die Lebensdauer bzw. das ästhetische Aussehen der Gegenstände beeinträchtigt wird.

Aus der US-PS 2 470 963 ist ein Dekorationselement, d.h. genauer ein Knopf, bekannt, auf dessen Unterseite eine Schmelzklebstoffschicht angebracht ist. Die Schmelzklebstoffschicht ist in Form eines zylindrischen Schaftes ausgebildet und verbindet sich beim Erwärmen mit dem Gewebe. Ein durch Wärmefixierung gebildeter Flansch kann jedoch in diesem Fall nur einen Durchmesser haben, der dem Durchmesser der Applikationsseite entspricht. Dadurch ist eine sichere Befestigung an einem Kunststoff bzw. Ledermaterial nicht möglich.

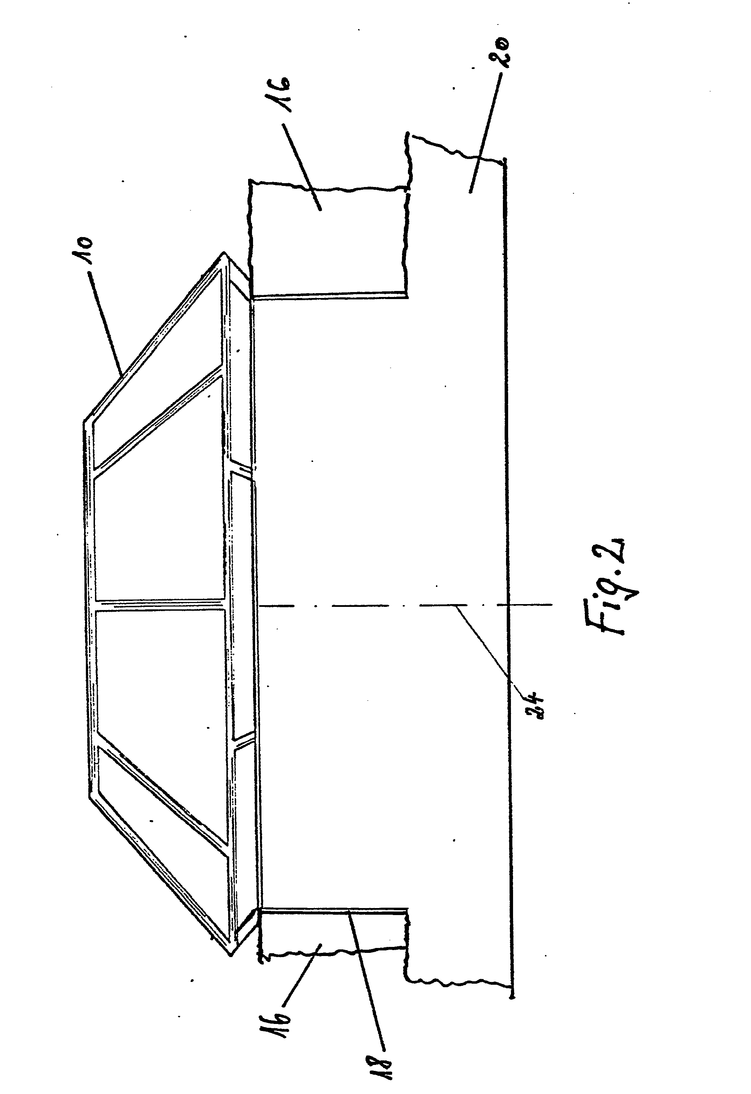

Aus der, den nächsten Stand der Technik bildenden GB-A 1 123 797 ist ein Verfahren zum Applizieren von Ziersteinen bekannt, bei dem die Ziersteine von einer Kunststoffassung aus einem Thermoplasten gehalten werden (Fig. 2). Die Kunststoffassung umfasst den Äquator eines Steins, um diesen festzuhalten, wobei die grössere untere Hälfte des Steins sich innerhalb der Fassung befindet. Der Stein wird über einen an der Fassung befestigten Stift appliziert.

Es ist Aufgabe der vorliegenden Erfindung, ein Verfahren zum Applizieren eines geschliffenen Ziersteines zu liefern, mit dem eine sichere Verbindung mit dem Applikationsmaterial, insbesondere mit geschichteten Materialien, Leder, besonders Wildleder usw., erreicht wird.

Diese Aufgabe wird mit einem Verfahren zum Applizieren eines geschliffenen Ziersteines, auf dessen rückwärtiger flacher Applikationsseite ein Schmelzklebstoffschaft aufgeklebt ist, bei dem der Schmelzklebstoffschaft durch eine Perforation des mit dem Zierstein zu versehenden Materials gesteckt wird, dem Schmelzklebstoffschaft Wärme zugeführt und der erweichte Schmelzklebstoffschaft durch Druck zu einem Flansch auf der der Dekorationsseite gegenüberliegenden Seite des Materials geformt wird, gelöst.

Mit diesem Verfahren ist es möglich, den Zierstein durch das Applikationsmaterial hindurchzustecken und durch anschliessendes Erwärmen auf der Materialrückseite einen den Zierstein fest mit dem Applikationsmaterial verbindenden Flansch auszubilden.

Derartig angebrachte Ziersteine ermöglichen die Ausbildung von Ornamenten in jeglicher Form, wobei eine einfache Verbindung der Schmelzklebstoffschicht mit der Rückseite des Ziersteins aufgrund der üblichen Schliffform des Ziersteins gewährleistet ist.

Dabei ist der Schaft zylindrisch mit einer sich in Applikationsrichtung erstreckenden Zylinderachse ausgebildet. Ein derartiger Zylinder ist die günstigste Form, bei kleinstem Volumen eine ausreichende Schmelzklebstoffmenge aufzunehmen, wobei ebenfalls ein problemloses Hindurchstecken durch das Applikationsmaterial möglich ist.

Dadurch, dass der zylindrische Schaft einen etwa der Fläche der Applikationsseite des Ziersteins entsprechenden Durchmesser aufweist, wird eine gute Verbindung der Schmelzklebstoffschicht mit dem Zierstein gewährleistet.

Schliesslich weist der Schaft in vorteilhafter Weise eine Länge von etwa 1 bis 5 mm auf, um eine ausreichende Klebstoffschicht zur Ausbildung des Flansches bereitzustellen.

Ein gemäss dem erfindungsgemässen Verfahren verwendeter Zierstein ist in der Zeichnung dargestellt und wird im folgenden näher beschrieben.

Es zeigen:

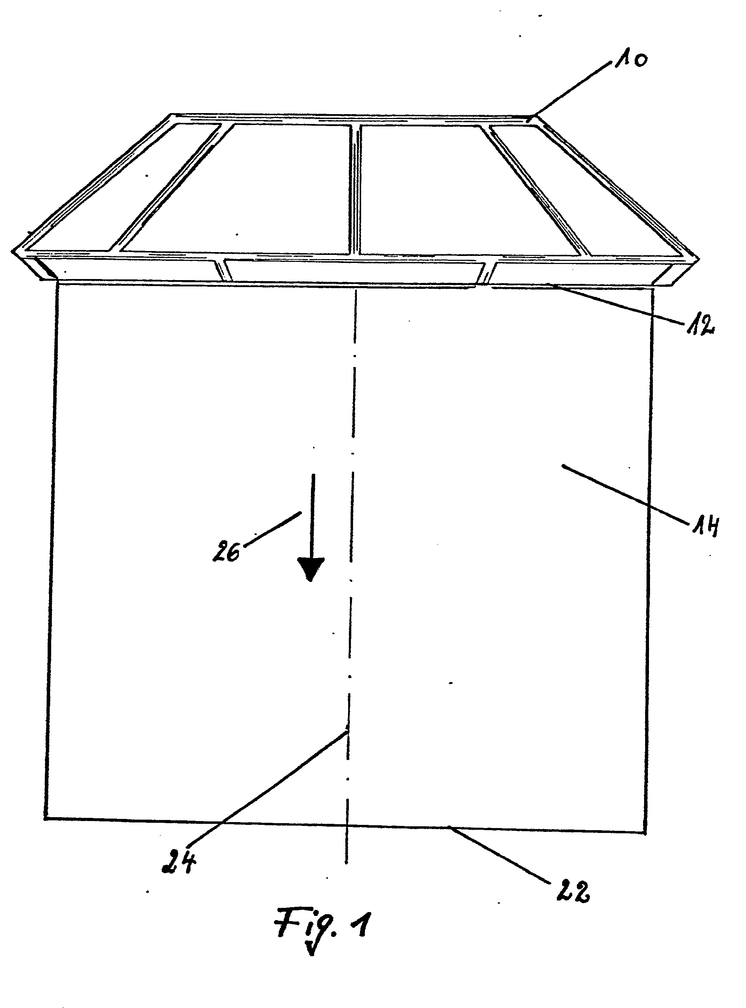

Fig. 1 eine schematische Seitenansicht des Ziersteins im Zustand vor der Anbringung an ein Applikationsmaterial; und

Fig. 2 einen an ein Applikationsmaterial angebrachten Zierstein.

Das in den Figuren dargestellte Dekorationselement umfasst einen geschliffenen Zierstein 10, z.B. aus Glas oder einem geeigneten Kunststoff, der auf seiner rückwärtigen flachen Applikationsseite 12 mit einem Schaft 14 aus einem Schmelzklebstoff verbunden ist. Als Material für den Schmelzklebstoff kommen nichthärtende, schmelzbare Harze mit Zusätzen von macromolekularen Stoffen, z.B. Polyamiden, Äthylzellulose, Polyvinylazetat u.dgl., sowie selbsthärtende Kunststoffe infrage. Als Kunststoffe dieser Art können Polyesterharze, Epoxydharze, Isozyanate und Aminoplaste, gegebenenfalls unter Zusatz von Katalysatoren, verwendet werden

Auch das Material des Ziersteins ist nicht auf Glas oder Kunststoff beschränkt, vielmehr können beliebige Materialien, insbesondere Metalle, wie verchromtes, verkupfertes, versilbertes Stahlblech und dergl., sowie die verschiedensten gefärbten Kunststoffe verwendet werden.

Der Schaft 14 ist im dargestellten Ausführungsbeispiel zylindrisch mit einer sich in Applikationsrichtung 26 erstreckenden Zylinderachse 24 ausgebildet. Dabei weist der zylindrische Schaft 14 einen etwa der Fläche der Applikationsseite 12 des Ziersteins 10 entsprechenden Durchmesser auf. Die Länge des Schaftes 14 liegt zwischen 1 mm und 5 mm, je nach Dicke des Applikationsmaterials 16.

In Fig. 2 ist der Zierstein 10 in seinem am Applikationsmaterial 16 angebrachten Zustand dargestellt. Dabei ist auf der Unterseite des Applikationsmaterials ein Schaftflansch 20 durch Erwärmen des Schaftes 14 und Verpressen mit dem Applikationsmaterial 16 ausgebildet, der den Zierstein 10 sicher mit dem Applikationsmaterial verbindet. Das Ausbilden des Flansches 20 geschieht in an und für sich bekannter Weise durch Aufbringen einer Heizfläche auf die Schaftunterseite 22, wodurch der Schmelzklebstoff schmilzt, und anschliessendes Verpressen mit dem Applikationsmaterial 16. Dabei weist der Schaftflansch 20 eine wesentlich geringere Dicke als das Applikationsmaterial 16 auf, um, z.B. bei Kleidungsstücken, die Trageigenschaften nicht zu beeinträchtigen.

Wie aus Fig. 2 ersichtlich, kann der Zierstein durch einfaches Hindurchstecken durch eine Perforation 18 im Applikationsmaterial 16 in Applikationsrichtung 26 parallel zur Zylinderlängsachse 24 und anschliessendes Erwärmen der Schaftunterseite 22 und Verpressen mit dem Applikationsmaterial 16 mit selbigem verbunden werden.

Bei dem gezeigten Zierstein ist der Schaft 14 zylindrisch ausgebildet. Sein Durchmesser entspricht etwa der Fläche der Applikationsseite 12 des Dekorationselements 10. Es ist jedoch ebenfalls denkbar, je nach Form und Grösse des Ziersteins, dass der Schaft einen etwas grösseren oder einen etwas kleineren Durchmesser als die Unterseiten des Ziersteins aufweist. Weiter ist seine Form nicht notwendigerweise auf einen Zylinder mit einer in Applikationsrichtung 26 verlaufenden Zylinderlängsachse 24 beschränkt, vielmehr kann jede beliebige zweckmässige Form des Schaftes gewählt werden, wobei für die Kriterien eine gute Verbindung mit der Applikationsseite 12 des Ziersteins 10, ein ungehindertes Hindurchstecken durch die Perforation 18 des Applikationsmaterials 16 und eine ausreichende Schmelzklebstoffmenge zu berücksichtigen sind.

Das Verfahren zum Applizieren von Ziersteinen eignet sich zum Dekorieren jeglicher Materialien, insbesondere Textilien und Leder aller Art.

## Patentansprüche

Verfahren zum Applizieren eines geschliffenen Ziersteines (10), auf dessen rückwärtiger flacher Applikationsseite (12) ein Schmelzklebstoffschaft (14) aufgeklebt ist, bei dem der Schmelzklebstoffschaft (14) durch eine Perforation des mit dem Zierstein (10) zu versehenden Materials gesteckt wird, dem Schmelzklebstoffschaft (14) Wärme zugeführt und der erweichte Schmelzklebstoffschaft (14) durch Druck zu einem Flansch (20) auf der der Dekorationsseite gegenüberliegenden Seite des Materials (16) geformt wird.

## Claims

A method for applying a cut ornamental stone (10) having bonded to its back flat application side (12) a melt adhesive shaft (14), wherein the melt adhesive shaft (14) is passed through a perforation in the material to be provided with the stone (10), heat is supplied to the shaft (14) and the softened shaft (14) is formed by pressure into a flange (20) on the side of the material (16) opposite the decorating side.

## Revendications

Procédé d'application d'une pierre taillée décorative (10) sur le côté envers plat d'application (12) de laquelle est collée une tige (14) d'adhésif à fusion par la chaleur, procédé dans lequel la tige (14) d'adhésif à fusion par la chaleur est enfilée dans une perforation du marériel qui doit être muni de la pierre décorative (10), un apport de chaleur étant effectué sur la tige (14) d'adhésif à fusion par la chaleur et la tige (14) d'adhésif à fusion par la chaleur ramollie recevant sous l'effet d'une compression la forme d'un rebord (20) du côté du matériau (16) situé à l'opposé du côté décoratif.

*Fig. 1*

Fig. 2

EP 0 282 729 B1